# EUROPEAN PATENT APPLICATION

(11) **EP 0 711 655 A2**
(43) Date of publication of application: **15.05.1996**
(21) Application number: 95116935.8
(22) Date of filing: 27.10.1995
(51) Int. Cl.: B32B 21/13

(54) **A method for the production of a resin and wood laminated product and the laminated product obtained by this method**

(30) Priority: 10.11.1994 IT MI942279
(71) Applicant: ALPI S.p.A., I-47015 Modigliana, Forli (IT)
(72) Inventor: Ciani, Giuseppe, I-47015 Modigliana, Forli (IT)
(74) Representative: Petruzzelli, Antonio European Patent Attorney

(57) **Abstract**

A method for the production of a laminated product of wood and resin comprising the following steps: preparation of base sheets, placing of the base sheets one on top of the other with a bonding resin, chosen from the group comprising melamine resins and modified melamine resins, in between to form a stacked whole of sheets, placing of said stack in a heat press and compression at a pressure of between 20 and 60 kg/cm² at a temperature and for a length of time which are adequate for achieving polymerisation of the resin, so as to obtain a laminated pack of resin and wood wherefrom it is possible to obtain a final product in laminated wood such as to appear fully finished after smoothing and/or brushing and such that it does not require any subsequent painting operation.

## Description

The present invention relates mainly to a method for obtaining a laminated pack of resin and wood wherefrom strips or blocks of a certain thickness are formed for producing edges, frames and shaped objects in general, as well as the laminated product obtained by this method.

At present laminated products of resin and wood are mostly produced for the creation of shaped objects, such as conventional plywood, wherein the sheets of wood are impregnated with phenolic resins and placed one on top of the other, with the veins arranged crosswise, and then compressed at a compression value of 3 - 4 kg per cm² so as to achieve polymerisation of the phenolic resin.

The disadvantage of these traditional products concerns the fact that the product obtained in this way, although having upper and lower faces with the veins of the wood adopted, has on the contrary the sides coloured substantially dark brown by the phenolic resin used.

The laminated wood product obtained in this way, in order to be used, has to be painted, at considerable cost both due to the actual cost of the raw materials used for painting and to the cost of the complex systems used for this type of painting operation. This painting phase requires also performance times which form a considerable part of the overall production times of manufacture of the product, it being in fact necessary to perform several operations in order to achieve proper painting, i.e. smoothing of the surface to be painted with abrasive brushes, actual painting and subsequent drying of the painted product.

All this is combined with the fact that the operation of painting is often carried out by the end users of the laminated wood product who are usually wood or furniture craftsmen, whose business is small in size, and who normally are unable to purchase the costly painting systems required for achieving satisfactory and even painting of the end product, and who above all do not have the necessary technical expertise for mixing of paint to standard such as to imitate the colours of natural wood as far as possible.

For all these reasons, when manufacturing laminated resin and wood products, the need to eliminate the final operation of painting of the product is strongly felt.

Likewise known in the art are products referred to as plastic laminates, i.e. products composed of sheets of fibrous material impregnated with thermosetting resins.

In their typical layered configuration, the laminated products are made with sheets of paper material forming the base of the laminated product and impregnated with phenolic resin, and with a surface sheet of decorative material which can be of any valuable wood type or another suitable material, such as for example paper printed with a pattern imitating the veins of wood or with a pattern of another kind. Said external decorative layer is generally impregnated with a melamine resin.

The laminated plastic product is obtained by compressions which are somewhat high, around 50-70 kg/cm², and with maximum baking temperatures of 100-150°C.

From this laminate a product can be obtained also for the production of edges or the like, wherein the edges obtained from this plastic laminate have however a double disadvantage. On the one hand they have an unattractive appearance of plastic which makes them poorly suited for combination with products in natural wood or with veneering to imitate wood and, on the other hand, due to the underlying "phenolic" sheets of paper, have sides whose colour tends towards dark brown. As a result the edge or similar obtained from a plastic laminate of the type mentioned must also be painted with all those disadvantages referred previously.

For what is referred above the need has been felt for some time by producers of edges, frames and shaped objects in general to have a base strip or block of material to be shaped which does not force painting of the finished shaped product.

The object of the present invention is therefore that of providing a procedure for producing a laminated pack of wood and resin, so that the laminated product obtained from the latter has features such that the operation of painting the surface of the finished product is superfluous.

The present invention also has as an object a method for producing a laminated product from a laminated pack of resin and wood obtained by this method.

Research carried out by the Applicant has allowed a method to be prepared for providing a laminated pack of wood and resin from which to form strips or blocks of a certain thickness for the production of edges, frames and shaped objects in general, comprising the following steps: preparation of the base sheets of wood, stacking of the base sheets with a bonding resin placed in between and subjecting of said stacked sheets to heat compression at a temperature and for a length of time which are adequate for achieving polymerisation of the resin in order to obtain a laminated pack of wood and resin. Said method is characterised in that said bonding resin is chosen from the group comprising melamine resins and modified melamine resins, and in that the pressure during said heat compression has a compression value of between 20 and 60 kg/cm².

Within this pressure range polymerisation and homogenisation of the resin with the sheets of wood are achieved without the latter being damaged.

Modified melamine resin refers to any melamine resin to which plasticising or stiffening agents have been added. For example a ureic resin can be added as a stiffening agent and an acrylic resin as plasticising element.

Said melamine resins and modified melamine resins are wholly known to experts in the field and it is not therefore necessary to provide further information for their identification.

Substantially a pack is obtained, from which, due to the transparent and colourless appearance of the melamine resin, an end product can be formed, consisting of an object produced by further operations on said laminated pack or which may if necessary be formed directly from the same laminated pack of resin and wood, which, having its sides in the colour of the constituent wood, does not require any final operation of surface painting.

These and other aspects of the present invention will however be made clearer on reading the following description relating to preferred examples of embodiments of the method according to the present invention.

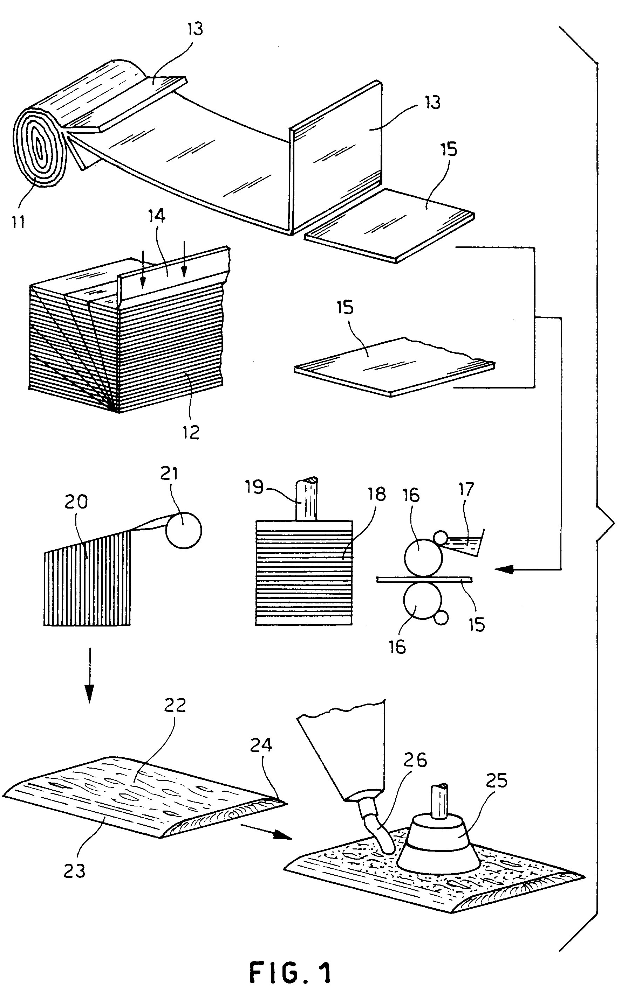

The only figure shows an example of the steps or phases of the method according to the present invention.

With reference to the accompanying drawing, it can be seen that the method for producing a laminated wood product according to the present invention is implemented by starting from a log of natural wood 11 or a log of wood precomposed in a fully known manner 12, which are rotary-cut or sawn respectively by appropriate cutting means 13 and 14 to provide a set of base sheets 15. Said base sheets 15 may if necessary be subjected also to further and specific operations aimed at improving the properties thereof, for example they may be dyed or flamed etc., but this does not represent an essential feature of the method of the present invention.

According to the invention, in the phase following preparation of the base sheets, said sheets 15 are impregnated, for example by suitable rollers 16, with a melamine or modified melamine resin 17, stacked one on top of the other, preferably with the veins arranged parallel, to form a stacked whole 18 and placed in a heat press 19.

The heat press compresses the stacked sheets 18 with pressures which may, according to the invention, vary from between 20 and 60 kg per cm². An optimum pressure could be around 35 kg per cm².

Heat compression is performed at temperatures and for lengths of time which are varied according to the resin used, in a manner fully known to any average expert in the field, in order to achieve polymerisation of the resin. If a melamine resin is used, for example the temperature set could be between a range of 0°C to 150°C, with baking times of for example 30 minutes and cooling times of 20 minutes.

Modified melamine resin refers to a melamine resin whereto additives have been added to improve some of its particular properties, for example in order to improve its mechanical resistance.

Said additives may for example consist of plasticising resins, such as an acrylic resin, or setting resins such as an ureic resin.

After this phase of heat compression, the pack of sheets 20 defining the laminated product of the present invention is either shaped directly or cut into working portions and later shaped. The whole is carried out using appropriate tools and various machines, which for convenience of description have been represented in the figure by the single cutting part 21. For example, from a rectangular strip of the laminated product, obtained according to the method of the invention, an edging element 22 can be obtained, as shown in the figure, which has sides or lateral edges 23, 24 which have been bevelled and rounded off.

Obviously the laminated product of the present invention can also be shaped in such a way as to form any other object, for example a door handle, a knife handle, any object intended for hobbies or others.

According to the present invention, the laminated product obtained in this way no longer has to be painted. In fact said laminated product, i.e. in the example shown the edging element 22, after shaping, no longer has those dark brown sides or lateral edges due to the conventional use of phenolic resin. This made the product unattractive and unusable, unless its surface was subsequently painted.

In order to remove the residues and sawdust of the processes of shaping, smoothing and polishing the external surface of the product 22, it is also possible to perform surface polishing of the shaped product 22, using for example simple pads 25 and acting with friction on the surface to be polished, or using any other suitable polishing device. Said polishing removes a dirty and at times opaque surface layer which has irregular abrasions due to machining and reveals an immediately underlying layer made shiny by the presence of the resin.

If necessary, it is possible to use during polishing any kind of abrasive paste or wax 26 which is suitable for the purpose.

It is wholly known that the cost of such a polishing operation is considerably lower than painting, due both to the saving in painting material and to the considerably lower cost of the machines or equipment intended for possible polishing compared to those required for painting.

The following examples of embodiment of the method of the present invention are useful for a better understanding of the features of the method and of the laminated product obtained therefrom.

### EXAMPLE 1

The following sheets or layers of wood are used as a basis:
13 sheets of multilaminar wood with a vertical vein and thickness of 6/10 mm,
1 sheet of multilaminar wood with flamed vein and thickness of 6/10 mm.

These sheets are impregnated on both faces with a melamine resin such as Sadecol L5043H, with an average quantity of grams of 100 per m², and later dried.

The various sheets are stacked with the veins parallel, placing the flamed type on the outside.

The stacked whole obtained in this way is placed in the heat press and pressed at a compression value of 30 kg/cm², at a temperature varied from around 20°C up to 140°C, fora time of 20 minutes. This is followed by cooling.

The panel or pack obtained has a thickness of approximately 5 mm.

### EXAMPLE 2

The following sheets or layers of wood are used as a basis:
1 sheet of Italian walnut, 5.5/10 mm thick,
14 sheets of multilaminar wood with a vertical vein in the same colour as the natural walnut, with a thickness of 6/10 mm.

The aforementioned sheets are impregnated on both faces with 110 g/m² of melamine resin of the type Melaplast WNC.

The sheets are stacked on the surface of the press by placing the sheet of Italian walnut on the external part.

The stacked whole of sheets obtained in this way is placed in the heat press and pressed at a compression value of 36 kg/cm², at a temperature which is varied from approximately 20°C up to 140°C and for a time of 20 minutes. This is followed by cooling.

The panel or pack obtained has a thickness of approximately 5 mm.

### EXAMPLE 3

The following sheets or layers of wood are used as a basis:
1 sheet of natural ash, 5.5/10 mm thick,
13 sheets of vertical multilaminar wood of the same colour as the ash,
6/10 mm thick, and
1 sheet of natural ash, 5.5/10 mm thick.

All the sheets are impregnated with 100 g/m² of Melaplast A60 melamine resin, with 10% Sadecol L3096 ureic resin added to increase rigidity and compactness thereof.

The sheets are placed one on top of the other with parallel veins and pressed at a pressure of 40 kg/cm² with baking at a temperature of from 20°C to 140°C and subsequently cooled for approximately 20 minutes.

The laminated product obtained in this way has a thickness of approximately 5-6 mm.

### EXAMPLE 4

14 sheets or layers of rotary-cut "Kotò", 7.5/10 mm thick, dyed as required in a vat, are used as a basis. Said sheets are impregnated with Melaplast WNC resin with 15% acrylic resin as additive, in a quantity of 120 g/m² circa. The sheets are later dried, stacked and pressed at 45 kg/cm², baking at from 20°C to 150°C for 25 minutes, followed by cooling for approximately 20 minutes.

The thickness of the panel or pack obtained is around 5-6 mm approximately.

The product obtained from the various previous examples, according to the purposes for which it is to be used, is cut, bonded, shaped and smoothed with abrasive paper having a grain of 150-180, subsequently 500-600 and finally 800-1000.

At this stage the surface is highly opaque and thus a sheet of ABALUX BIANCA AS E 61 abrasive wax is applied, followed by application of a pad until the final polish is achieved, which could be improved by applying a polish such as LUXITE EXTRA, also buffed with a pad.

As is clear from the foregoing examples, in order to provide useful indications for the expert in the field for embodiment of the present invention, materials bearing relevant trademarks were used.
It is clear obviously that what has been written in the aforementioned embodiment examples, and shown with reference to the accompanying drawing, is given purely by way of a non-limiting example of the innovative principle claimed. For example the layered pack may be composed, in an equivalent manner, instead of sheets of wood with a substantially rectangular shape, as shown, of sheets of wood in the form of continuous strips which can be coupled continuously by hot calendering to form a pack packaged in a coil shape, without thereby departing from the principle claimed.

## Claims

1. A method for the production of a laminated pack of wood and resin comprising the following steps: preparation of the base sheets of wood, stacking of the base sheets with a bonding resin placed in between, and subjecting of said stacked sheets to heat compression at a suitable temperature and for a suitable length of time for polymerisation of the resin, to obtain a laminated pack of wood and resin; characterised in that said bonding resin is chosen from the group comprising melamine resins and modified melamine resins and in that the pressure during said heat compression has a compression value of between 20 and 60 kg/cm².

2. A method for the production of a laminated wood product basing on the laminated pack obtained according to the method of claim 1, characterised in that said pack, or a portion thereof, is cut and shaped and a final laminated wood product is obtained such that it does not require any painting operation.

3. A method for the production of a laminated wood product, according to the method of claim 2, characterised in that a further phase of surface polishing of the laminated wood product is provided after the shaping phase.

4. A method for the manufacture of a laminated wood product, according to claim 3, characterised in that said phase of polishing includes the use of an abrasive wax or paste.

5. A laminated pack of wood and resin obtained according to the method of claim 1.

6. A laminated wood product obtained according to the method of any one of claims 2 to 4.
